# NEUE EUROPÄISCHE PATENTSCHRIFT

(11) **EP 0 993 698 B2**
(45) Veröffentlichungstag und Bekanntmachung des Hinweises auf die Entscheidung über den Einspruch: **30.09.2009**
(45) Hinweis auf die Patenterteilung: 22.10.2003
(21) Anmeldenummer: 98936261.1
(22) Anmeldetag: 29.06.1998
(51) Int. Cl.: H02P 5/52, B41F 13/004, G05B 19/19

(54) **VERFAHREN UND VORRICHTUNG ZUM DEZENTRALEN BETRIEB BZW AUFBAU EINER WINKELGENAUEN GLEICHLAUFREGELUNG IN EINEM MEHRMOTORENANTRIEBSSYSTEM**
METHOD AND DEVICE FOR THE DECENTRALISED OPERATION OR CONSTRUCTION OF A PRECISE ANGLE SYNCHRO-CONTROL SYSTEM IN A MULTI-MOTOR DRIVE SYSTEM
DISPOSITIF ET PROCEDE D'EXPLOITATION DECENTRALISEE OU DE REALISATION D'UNE REGULATION DE SYNCHRONISME CONFORME DANS UN SYSTEME D'ENTRAINEMENT A PLUSIEURS MOTEURS

(30) Priorität: 30.06.1997 DE 19727824
(43) Veröffentlichungstag der Anmeldung: 19.04.2000
(73) Patentinhaber: SIEMENS AKTIENGESELLSCHAFT, 80333 München (DE)
(72) Erfinder: COUTO, Paulo, D-85551 Kirchheim (DE)
(86) Internationale Anmeldenummer: PCT/DE1998/001783
(87) Internationale Veröffentlichungsnummer: WO 1999/001928

(56) Entgegenhaltungen:
- EP-A- 0 567 741
- EP-A- 0 698 572
- WO-A-97/11848

## Beschreibung

Die Erfindung bezieht sich auf ein Verfahren zum dezentralen Aufbau einer Einrichtung zur Regelung des winkelgenauen Gleichlaufs einzelner, drehzahlveränderbarer Elektroantriebe eines durch einen Synchronisationsbus vernetzten Mehrmotorenantriebssystem, wobei den Antrieben ein Winkelsollwert eines Leitzeigers vorgegeben wird. Daneben bezieht sich die Erfindung auch auf die zugehörige Vorrichtung zwecks Durchführung dieses Verfahrens. Ein derartiges Verfahren und die entsprechende Vorrichtung sind beispielsweise aus der DE 43 22 744 A1 bekannt.

In den letzten Jahren sind die Anstrengungen, mechanische durch elektrische Antriebskomponenten zu ersetzen, besonders in der Druckindustrie stark intensiviert worden. Im Europäischen Patentdokument EP 0 567 741 B1 wird ein auf eine Rotationsdruckmaschine bezogener Aufbau vorgestellt, bei dem Antriebe und deren Antriebsregler zu Drucksteilen- bzw. Antriebsgruppen, die ihre Positionsreferenz direkt vom Falzapparat beziehen, zusammengefaßt und durch ein übergeordnetes Leitsystem verwaltet werden.

Das Internationale Patentdokument WO 97/11848 A beschreibt eine wellenlose Rotationsdruckmaschine, bei der die Antriebsgruppen aufgelöst werden und jeder Antrieb als kleinste vollständige Einheit der Rotationsdruckmaschine definiert wird. Durch die beliebige Zuordenbarkeit jedes einzelnen Antriebs zu unterschiedlichen Falzapparaten erhöht sich die Flexibilität des Antriebskonzeptes.

Weiterhin ist aus der DE 34 11 651 C1 eine Regelanordnung für den Gleichlauf mehrerer Antriebe bekannt, bei dem jedem zu regelnden Antrieb ein Positionsregler vorgegeben ist, dem ein Geschwindigkeitsregler nachgeschaltet ist. Dabei wird also der Sollwert zentral vorgegeben.

Im Aufsatz "Digitale Antriebe und SERCOS-Interface" aus "Antriebstechnik", Band 31 (1992), Nr. 12, Seiten 30 bis 38, werden verschiedene Aufbauten mit digitalen Antrieben vorgestellt, die über das serielle Echtzeit-Kommunikationssystem SERCOS-Interface mit einer CNC-Steuerung als übergeordnetes Leitsystem vernetzt sind. Bei diesen Antriebssystemen muß neben der Istwerterfassung, Regelung und Pulsweitenmodulation aller Achsen auch die Sollwertverarbeitung synchronisiert werden. In der Betriebsart "Lageregelung" wird von der CNC-Steuerung ein synchronisierter und zeitkritischer Lagesollwert an die digitalen Antriebe gesendet.

Im Aufsatz "Dezentral bringt mehr" aus der Siemens-Zeitschrift "drive & control", Nr. 1/96, Seiten 4 bis 6, wird anhand einer Form-, Füll- und Verschließmaschine für Becher ein dezentrales Antriebssystem vorgestellt, bei dem die einzelnen Antriebe ihre Sollwerte vom jeweiligen, fest zugeordneten Vorgängerantrieb über eine sog. "Peer-to-Peer"-Querkopplung erhalten.

In der industriellen Praxis, insbesondere in der Druckindustrie, kann ein Antrieb mehreren Antriebsverbunden zugeordnet werden, wobei der Lagebezugspunkt nicht ein Falzapparat sein muß. Aus diesem Grund sind Konzepte, bei denen ein Antrieb festzugeordneten Leitantrieben folgt, nicht unbegrenzt einsetzbar. Moderne, im Einsatz bewährte Systeme besitzen daher eine Sollwertvorgabe, die nach dem Prinzip der "virtuellen Leitwelle" (rotierender Leitzeiger) arbeiten, was in der WO 97 11848 A und im Aufsatz "Digitale Antriebe und SERCOS-Interface" im einzelnen beschrieben ist. Alle Antriebe, die zu einem Verbund gehören, synchronisieren sich auf eine imaginäre Leitwelle, die mechanisch nicht existiert. Realisiert wird diese elektrische Leitwelle mit einem Winkelsollwertgenerator nach dem Prinzip eines Interpolators oder Sägezahngenerators.

Ausgehend vom beschriebenen Stand der Technik ist es Aufgabe der Erfindung, ein Verfahren und eine zugehörige Vorrichtung für eine dezentrale Gleichlaufregelung anzugeben, die in besonderer Weise für direkt angetriebene, wellenlose Verarbeitungsmaschinen der Papier-, Druck-, Verpackungs- und Textilindustrie geeignet sind. Eine solche dezentrale Gleichlaufregelung soll auch für relationsbehaftete Antriebe einsetzbar sein und die freie Zuordenbarkeit der einzelnen Antriebe zu unterschiedlichen Antriebsverbunden gewährleisten, bei gleichzeitiger Befreiung des überlagerten Systems von zeitkritischen und synchronisierten Aufgaben.

Die Aufgabe ist erfindungsgemäß dadurch gelöst, daß in jedem Antrieb ein eigener Leitzeigerwert generiert wird, der aus einem allen Antrieben über den Synchronisationsbus zugeführten Drehzahlsollwert dezentral im jeweiligen Antriebsregelgerät gebildet wird. Vorzugsweise wird der Leitzeigerwert aus dem Drehzahlsollwert in Form eines Sägezahnes erzeugt. Dabei wird der Leitzeigerwert vorteilhafterweise statisch wie dynamisch auf einen vorgegebenen Winkel gesetzt, wobei der Leitzeigerwert auf jeden beliebigen Bezugspunkt setzbar ist.

Besonders vorteilhaft ist bei der Erfindung, daß der Leitzeiger dezentral jeweils im einzelnen Antriebsregelgerät untergebracht ist. Damit benötigen die einzelnen Antriebsregelgeräte ausschließlich zeitunkritische Sollwerte, womit an ein vorhandenes, übergeordnetes Leitsystem keine besonderen Geschwindigkeits- und Synchronisationsanforderungen gestellt werden. Vorzugsweise wird jeder Antrieb mit einer individuellen Drehzahlrelation behaftet. Ein solcher relationsbehafteter Antrieb wird gleichlaufgeregelt und hält winkelgenau seine relative Lage ein. Weiterhin kann jeder Antrieb mit einem individuellen Versatzwinkel beaufschlagt und damit in seiner Lage verstellt werden.

Die zugehörige Vorrichtung zur Durchführung des Verfahrens besteht aus einem übergeordneten Leitsystem, das über einen Synchronisationsbus mit Antriebsregelgeräten verbunden ist, wobei jedes einzelne Antriebsregelgerät einen eigenen Winkelsollwertgeber als Leitzeiger hat. Der Leitzeiger ermittelt aus einem an alle Antriebsregelgeräte übermittelten Drehzahlsollwert einen Leitzeigerwert für das jeweilige Antriebsregelgerät. Die Vorrichtung ist dezentral und kann modular aufgebaut sein. Neben dem jeweils eigenen Leitzeiger ist vorzugsweise auch jeweils ein eigener Hochlaufgeber dezentral vorhanden. Vorteilhafterweise ermöglicht der jeweilige Hochlaufgeber, durch Drehzahlsollwertvorgabe "Null" und Umschaltung auf eine parametrierbare Rücklauframpe bei Kommunikationsstörung des Synchronisationsbusses jeden einzelnen Antrieb gleichlaufgeregelt und parallel stillzusetzen. Für die Drehzahlrelation ist dabei vorteilhaft, daß sie einen festen Wert besitzt oder vom übergeordneten Leitsystem vorgegeben werden kann.

Entscheidend ist nunmehr die durchgängige Dezentralisierung der Sollwertgabe, wobei die dafür verwendeten Leitzeiger dezentral angeordnet sind. Mit der Erfindung wird vorteilhafterweise erreicht, daß einerseits das Antriebsregelgerät keine zeitkritischen Sollwerte benötigt und daß keine übergeordnete synchronisierte Sollwertbildung in einem Antriebsmaster notwendig ist. Die Funktionalität des Antriebsmasters, die bisher als separates Gerät vorhanden oder im Leitsystem integriert war, kann damit entfallen.

Weitere Einzelheiten und Vorteile der Erfindung ergeben sich aus der nachfolgenden Figurenbeschreibung von Ausführungsbeispielen anhand der Zeichnung. Es zeigen jeweils als Blockschaltbild:
- Figur 1: ein System gemäß dem Stand der Technik,
- Figur 2: eine erste Anordnung gemäß der Erfindung und
- Figur 3: eine mit erweiterten Funktionalitäten versehene zweite Anordnung gemäß der Erfindung.

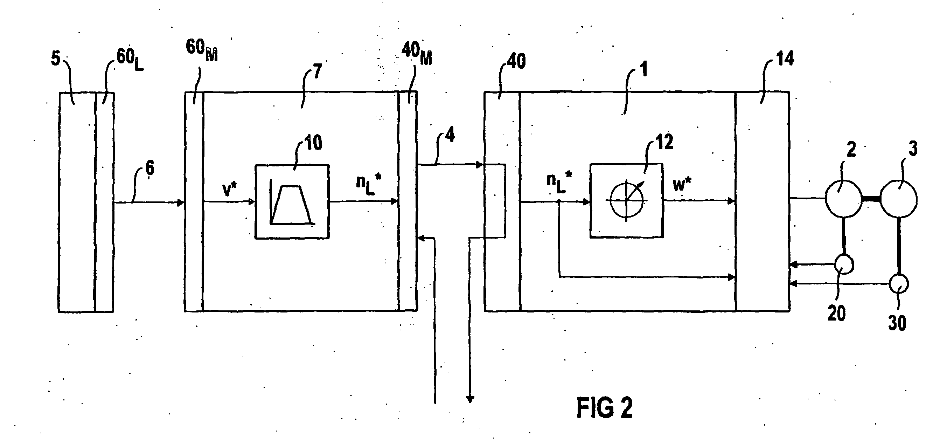

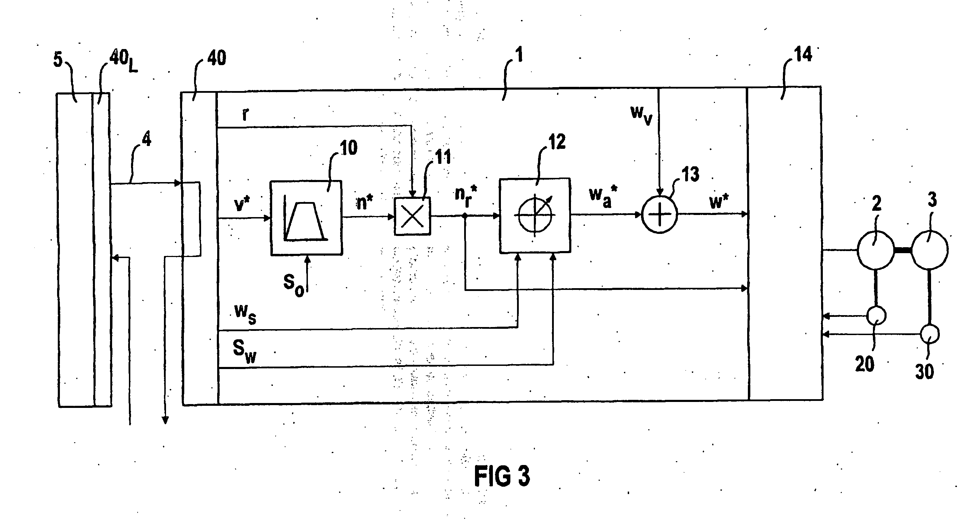

Die Figuren 2 und 3 werden teilweise gemeinsam beschrieben. Gleiche bzw. sich entsprechende Teile haben gleiche Bezugszeichen.

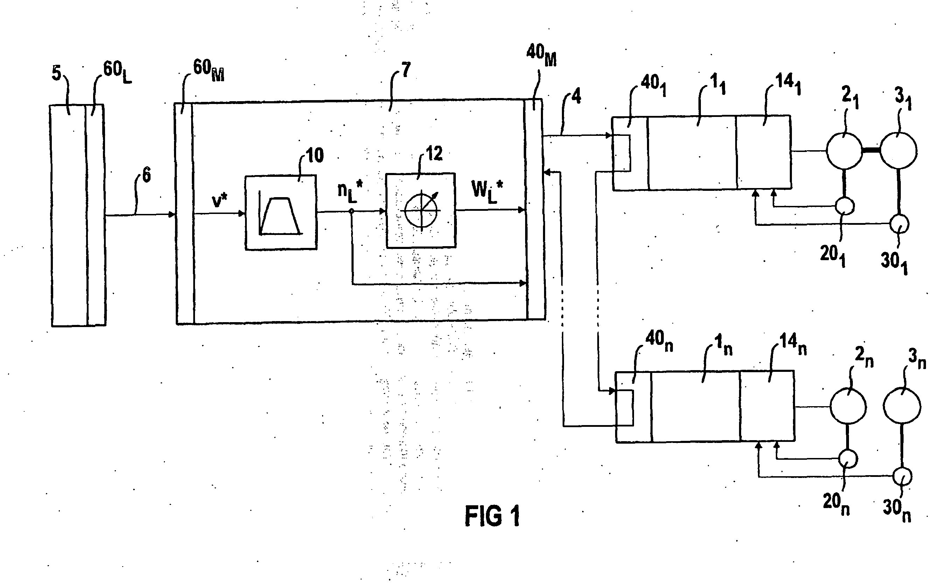

Als Stand der Technik kann ein System betrachtet werden, das prinzipiell nach FIG 1 aufgebaut ist. Eine Einrichtung, im folgenden als Antriebsmaster 7 bezeichnet, übernimmt die zeitkritischen Aufgaben und entlastet damit ein üblicherweise vorhandenes, übergeordnetes Leitsystem 5.

Das Leitsystem 5 versorgt den Antriebsmaster 7 mit der Maschinengeschwindigkeit v*. Dieser Sollwert wird über einen Hochlaufgeber 10 geführt, der den Drehzahlleitsollwert n_{L}* erzeugt. Der Leitzeiger 12 generiert einen dem Drehzahlsollwert n_{L}* entsprechenden Winkelleitsollwert w_{L}*. Diese beiden Sollwerte werden an die Antriebsregelgeräte für den ersten Antrieb 1₁ bis zum übernächsten Antrieb 1ₙ gesendet. Die Anzahl angeschlossener Antriebe kann bis zu etwa 100 betragen.

Die Antriebsregelungen 14₁ - 14ₙ bestehen im Wesentlichen aus einer Gleichlauf- und einer Momenten-/Stromregelung, wobei eine Gleichlaufregelung antriebstechnisch als eine Drehzahlregelung mit überlagerter Winkelregelung definiert wird, und laufen komplett in den Antriebsregelgeräten 1₁ - 1ₙ ab. Jeder Gleichlaufregelkreis wird durch die Zurückführung der Gebersignale aus den hochauflösenden Drehgebern 20₁ - 20ₙ, die die Lage der Motoren 2₁ - 2ₙ ermitteln, geschlossen. Durch Differentiation der Lage kann die Drehzahl des Motors berechnet werden. Bei hohen Anforderungen an die Genauigkeit wird die Lage der Arbeitsmaschinen 3₁ - 3ₙ auch mit den Zusatzgebern 30₁ - 30ₙ erfaßt.

Voraussetzung zur Realisierung eines solchen Aufbaus ist das Vorhandensein eines Bussystems zwischen Antriebsmaster 7 und Antriebsregelgeräten 1₁ - 1ₙ, der einerseits einen schnellen Datendurchlauf ermöglicht, aber darüber hinaus alle Teilnehmer über eine interruptgesteuerte, zentrale Taktvorgabe synchronisieren kann. Aus diesem Grund wird ein solches Bussystem, in der EP 0 567 741 B1 Antriebsbus genannt, im folgenden als Synchronisationsbus 4 bezeichnet. Dieser Synchronisationsbus 4 gewährleistet, daß alle Antriebe ihre Winkelistwerte zum gleichen Zeitpunkt und in gleichen Zeitabständen, d.h. zeitäquidistant, ermitteln. Dieser Zeitabstand entspricht der Zeitbasis, die für die Bildung der Winkelinkremente gilt. Daher muß die Bildung des Winkelsollwerts im Antriebsmaster 7 im Takt der Interrupterzeugung des Synchronisationsbusses 4 gerechnet werden.

Das bekannte SERCOS-Interface oder das neu vorgestellte optische System SIMOLINK^{®} entsprechend Siemens Produktinformation SIMOVERT MASTER DRIVES Motion Control erfüllen die Bedingungen, die an ein Synchronisationsbus im obigem Sinn gestellt werden.

Antriebsmaster 7 und Antriebsregelgeräte 1₁ - 1ₙ müssen mit entsprechenden Schnittstellen 40_{M} bzw. 40₁ - 40ₙ für den Synchronisationsbus 4 ausgerüstet sein. Für den obengenannten SIMOLINK^{®} stehen entsprechend Siemens-Produktinformation Schnittstellen für das Regelsystem SIMADYN D^{®} auf der Antriebsmasterseite 40_{M} und für die Umrichterregelgeräte der Familie SIMOVERT^{®} Master Drives auf der Seite der Antriebsregelgeräte 40₁ - 40ₙ zur Verfügung.

Zeitunkritische Sollwerte, Istwerte, Parameter, sowie Steuerund Zustandssignale werden normalerweise über einen separaten Steuer- und Parametrierbus,der in FIG 1 nicht dargestellt ist, ausgetauscht. Ein solcher Bus wird in der WO 97 11848 A im einzelnen beschrieben. Zur Realisierung einer solchen Kommunikation kann z.B. PROFIBUS DP verwendet werden.

An die Kommunikation 6 zwischen Leitsystem 5 und Antriebsmaster 7 werden keine besonderen Anforderungen gestellt. Im Einsatz befindet sich z.B. der Datenbus PROFIBUS-FMS. Sowohl das Regelgerät SIMADYN D^{®} als Antriebsmaster 7 als auch die Automatisierungsgeräte SIMATIC^{®} S5/S7 als Leitsystem 5 entsprechend Siemens-Produktionsformation verfügen über entsprechende Schnittstellen 60_{M} bzw. 60_{L}. Die Funktionalität des Antriebsmasters kann aber auch im Leitsystem integriert sein.

Bezeichnend für die bisher bekannten Systeme ist die zentrale Generierung mindestens eines Winkelsollwerts, und damit einer zeitkritischen und synchronisierten Prozeßgröße. Ein solches Konzept besitzt den Nachteil, daß der Antriebsmaster 7 auf den Bustakt des Synchronisationsbusses 4 synchronisiert werden muß. Außerdem muß der Antriebsmaster 7 innerhalb jedes Bustaktes einen aktuellen Winkelleitsollwert w_{L}* berechnen.

Weitere Schwierigkeiten kommen hinzu, wenn der Winkelleitsollwert w_{L}* für jeden Antrieb individuell verändert wird, etwa durch die Addition eines antriebsbezogenen Winkelversatzes:
- Antriebsmaster 7 muß innerhalb des kurzen Bustaktes die Winkelsollwerte für alle Antriebe bilden.
- Geringe Modularität des Antriebsmasters 7, der in Abhängigkeit der Antriebsanzahl individuelle Sollwerte bilden muß.
- Schnelle Überbelastung des Antriebsmasters 7 bei steigender Antriebsanzahl.
- Zusätzliche Realisierung einer Drehzahlrelation im Antriebsmaster 7 nur mit hohem Aufwand und hoher Prozessorbelastung möglich.

Ausgehend von einem solchen bekannten System würde die Anordnung gemäß Figuren 2 und 3 weiter entwickelt. Gemeinsam und wesentlich ist bei beiden Anordnungen gemäß Figur 2 und 3, daß die Winkelsollwertgeneratoren 12 als Leitzeiger dezentral in das jeweilige Antriebsregelgerät 1₁ bis 1ₙ liegen. Dabei ist in Figur 2 noch ein Antriebsmaster 7 mit Hochlaufgeber 10 vorhanden, der aus dem Maschinengeschwindigkeitssollwert v* den Drehzahlsollwert n* erzeugt.

Die Anordnung gemäß Figur 3 bezieht sich auf einen vollständig dezentralen Aufbau, der alle Anforderungen an einen gleichlaufgeregelten Antrieb in einem durch einen Synchronisationsbus 4 vernetzten Mehrmotorenantriebssystem erfüllt, ohne dabei einem übergeordneten Leitsystem spezielle Anforderungen zu stellen.

Zur besseren Übersicht wird in FIG 2 und 3 nur ein einzelner Antrieb dargestellt. Gleiche Komponenten besitzen in FIG 1 sowie 2 und 3 gleiche Bezeichnungen, wobei in FIG 2 und 3 auf die Antriebsnummerierung 1 - n als Index verzichtet wird.

Nunmehr wird jedes dezentrale Antriebsregelgerät 1 mit einem Hochlaufgeber 10 und einem Leitzeiger 12 ausgerüstet. Über den Synchronisationsbus 4 wird jeder Antrieb mit dem zu seinem Maschinenverbund gehörenden Maschinengeschwindigkeitssollwert v* versorgt. Nach dem Verteilen der Sollwerte wird ein Interrupt an alle Antriebe gesendet. Durch diese Synchronisation wird gewährleistet, daß alle Teilnehmer eines Antriebsverbunds ihre Rechenzyklen immer mit dem gleichen, aktuellen Maschinengeschwindigkeitssollwert v* abarbeiten. Da digitale Systeme eine exakt gleiche Berechnung garantieren, kann jeder Antrieb für sich selbst die Drehzahl- und Winkelsollwerte ermitteln.

Der größte Vorteil des Aufbaus gemäß Figur 2 und 3 besteht darin, daß keine Winkelsollwerte oder Winkelabweichungen bei jedem Bustakt im Antriebsmaster gebildet werden müssen. Die Maschinengeschwindigkeit v* bzw. die Drehzahl n* wird direkt vom entsprechenden Bedienungssystem weitergeleitet und braucht nicht bei jedem Buszyklus aktualisiert werden. Damit können die Antriebsregelgeräte 1 direkt an das übergeordnete Leitsystem 5, das von zeitkritischen und synchronisierten Aufgaben befreit ist, angeschlossen werden.

Darüber hinaus wird die Abhängigkeit von der Antriebsanzahl modular in die Antriebsregelgeräte 1 verlagert. Einzige Bedingung ist, daß das Leitsystem 5 über eine Schnittstelle zum Synchronisationsbus 4 verfügt. Die Implementierung einer SIMOLINK^{®}-Schnittstelle in das Siemens Automatisierungsgerät SIMATIC^{®} S7 ist bereits realisiert.

Durch die geringe Belastung des Synchronisationsbusses 4, der nur den gemeinsamen Maschinengeschwindigkeitssollwert v* und die Interrupts verteilen muß, ist auch ein Anschluß von ca. 200 Antrieben an ein Leitsystem vorstellbar. Zur Entlastung des Synchronisationsbusses 4 empfiehlt es sich, asynchrone Sollwerte, wie die Relation r oder den Versatzwinkel wᵥ, über den separaten Steuer- und Parametrierbus zu senden.

Durch die nunmehr erfolgte Verlagerung des Hochlaufgebers 10 in das Antriebsregelgerät 1 kann die wichtige Funktionalität des gleichlaufgeregelten Anhaltens bei Busstörung auf einfache Weise verwirklicht werden. Bei Störung der Kommunikation mit dem Leitsystem 5, und damit Ausfall des Maschinengeschwindigkeitssollwertes v*, kann der Hochlaufgeber 10 mittels des internen Steuersignals "Hochlaufgeber Null setzen S₀" mit Sollwert gleich Null beaufschlagt werden. Gleichzeitig wird die Rücklaufzeit des Hochlaufgebers 10 auf eine bei allen Antrieben gleich parametrierte Bremsrampe umgeschaltet. Auf diese Weise können sich die einzelnen Antriebe gleichlaufgeregelt und damit parallel stillsetzen. Die entsprechenden Busüberwachungsmechanismen sind im oben erwähnten SIMOLINK^{®} implementiert.

Ein weiterer Vorteil des dezentralen Aufbaus besteht darin, daß modular eine Drehzahlrelation r realisiert werden kann, was speziell in Figur 3 zusätzlich implementiert ist. Diese Relation r entspricht dem Übersetzungsverhältnis eines mechanischen Getriebes und kann dabei einen festen Wert besitzen oder vom Leitsystem 5 vorgegeben werden. Der Relationswert r wird mittels des Multiplikators 11 mit dem Drehzahlsollwert n* multipliziert.

Der vorstehend anhand der Figuren 2 und 3 im einzelnen beschriebene Aufbau ermöglicht es somit, einen relationsbehafteten Antrieb winkelgenau gleichlaufzuregeln. Obwohl ein Antrieb mit Übersetzungsverhältnis ungleich 'Eins' naturgemäß nicht im absoluten Gleichlauf zu anderen Antrieben fährt, die ein anderes Übersetzungsverhältnis besitzen, muß es aber trotzdem Winkelfehler, die durch Sollwert- oder Lastsprünge entstehen, ausregeln und damit einen relativen Gleichlauf einhalten. Um diese Funktionalität zu verwirklichen, muß also jeder relationsbehafteter Antrieb mit einem eigenen Leitzeiger 12 ausgerüstet werden, der aus dem relationsbehafteten Drehzahlsollwert nᵣ* einen antriebsbezogenen Winkelsollwert wₐ* berechnet. Dies bedeutet, daß jeder Antrieb über eine eigene "virtuelle Welle" als Bezugspunkt verfügt.

Mittels des Steuersignals "Winkel setzen S_{w}" kann der Leitzeiger statisch oder dynamisch auf einen vorgegebenen Winkelsetzwert wₛ gesetzt werden. Damit läßt sich der Antrieb auf einen beliebigen Bezugspunkt positionieren oder synchronisieren.

Der antriebsbezogene Winkelsollwert wₐ* kann speziell in Figur 3 mit einem Addierer 13 zusätzlich mit dem Versatzwinkel wᵥ beaufschlagt werden. Damit kann der einzelne Antrieb in seiner Lage verstellt, und so die Funktionalität einer Register- oder Passerverstellung verwirklicht werden. Der Versatzwinkel wᵥ kann von dem Leitrechner 5 oder von einer externen Einrichtung, wie z.B. einer Registerregelung, vorgegeben werden. Der aus der Addition resultierende Winkelsollwert w* wird, zusammen mit dem relationsbehafteten Drehzahlsollwert nᵣ*, an die Gleichlaufregelung 14 weitergeleitet.

## Patentansprüche

1. Verfahren zum dezentralen Betrieb einer Einrichtung zur Regelung des winkelgenauen Gleichlaufs einzelner, drehzahlveränderbarer Elektroantriebe eines durch einen Synchronisationsbus vernetzten Mehrmotoren-Antriebssystems, wobei den Antrieben ein Winkelsollwert eines Leitzeigers vorgegeben wird, **dadurch gekennzeichnet, daß** in jedem Antrieb ein eigener Leitzeigerwert generiert wird, der aus einem allen Antrieben über den Sychronisationsbus (4) zugeführten Drehzahlsollwert dezentral im jeweiligen Antriebsregelgerät (1₁-1ₙ) gebildet wird.

2. Verfahren nach Anspruch 1, **dadurch gekennzeichnet, daß** der Leitzeigerwert aus dem Drehzahlsollwert (n*) in Form eines Sägezahns erzeugt wird.

3. Verfahren nach Anspruch 1, **dadurch gekennzeichnet, daß** der Leitzeigerwert statisch wie dynamisch auf einen vorgegebenen Winkel (wₛ) gesetzt wird, wobei der Leitzeigerwert auf jeden beliebigen Bezugspunkt setzbar ist.

4. Verfahren nach Anspruch 1, **dadurch gekennzeichnet, daß** jeder Antrieb dezentral mit einer individuellen Drehzahlrelation (r) beaufschlagt wird.

5. Verfahren nach Anspruch 4, **dadurch gekennzeichnet, daß** der relationsbehaftete Antrieb mittels des jeweils eigenen Leitzeigers (12) gleichlaufgeregelt wird und winkelgenau seine relative Lage einhält.

6. Verfahren nach Anspruch 1 oder Anspruch 5, **dadurch gekennzeichnet, daß** jeder Antrieb dezentral mit einem individuellen Versatzwinkel (wᵥ) beaufschlagt wird.

7. Verfahren nach Anspruch 1, **dadurch gekennzeichnet, daß** jeweils ein dezentraler Hochlaufgeber (10) verwendet wird, der es ermöglicht, durch Drehzahlsollwertvorgabe 'Null' und Umschaltung auf eine parametrierbare Rücklauframpe, bei Kommunikationsstörungen des Synchronisationsbusses (4) jeden einzelnen Antrieb gleichlaufgeregelt und parallel stillzusetzen.

8. Vorrichtung zur Durchführung des Verfahrens nach einem der Ansprüche 1 bis 7, mit einem übergeordneten Leitsystem (1), das über einen Synchronisationsbus (4) mit Antriebsregelgeräten (1₁-1ₙ) verbunden ist, wobei jedes einzelne Antriebsregelgerät (1₁-1ₙ) einen eigenen Winkelsollwertgeber als Leitzeiger (12) hat, der aus einem an alle Antriebsregelgeräte (1₁-1ₙ) übermittelten Drehzahlsollwert (n*) einen Leitzeigerwert für das jeweilige Antriebsregelgerät (1₁-1ₙ) ermittelt.

9. Vorrichtung nach Anspruch 8, **dadurch gekennzeichnet, daß** Multiplizierer (11) vorhanden sind, mit denen die dem Leitzeiger(12) zugeführte Drehzahl (n*) mit einer Drehzahlrelation (r) multipliziert, wobei die Drehzahlrelation (r) einen festen Wert besitzt oder vom übergeordneten Leitsystem (5) vorgegeben wird.

10. Vorrichtung nach Anspruch 8, **dadurch gekennzeichnet, daß** in jedem dezentralen Antriebsregelgerät (1₁-1ₙ) jeweils ein eigener Hochlaufgeber (10) vorhanden ist.

11. Vorrichtung nach Anspruch 8, **dadurch gekennzeichnet, daß** Addierer (14) vorhanden sind, mit denen der Versatzwinkel (wᵥ) dezentral dem jeweiligen Winkelsollwert (w*) aufaddierbar ist.

12. Vorrichtung nach Anspruch 8, **dadurch gekennzeichnet, daß** der Versatzwinkel (wᵥ) sowohl vom übergeordneten Leitsystem (5) oder von einer externen Registerverstellung bzw. -regelung vorgebbar ist.

## Claims

1. Method for the decentralised operation of a facility for controlling the precise angle synchronism of individual, variable-speed electric drives in a multi-motor drive system which is interconnected via a synchronisation bus, an angle setpoint of a control indicator being defined for the drives, **characterized in that** a separate control indicator value, which is formed in a decentralised manner in the respective drive controller (1₁ - 1ₙ) from a rotation speed setpoint value which is supplied to all drives via the synchronisation bus (4), is generated in each drive.

2. Method according to Claim 1, **characterized in that** the control indicator value is generated from the rotation speed setpoint value (n*) in the form of a sawtooth.

3. Method according to Claim 1, **characterized in that** the control indicator value is set statically and dynamically to a predefined angle (wₛ), it being possible to set the control indicator value to any desired reference point.

4. Method according to Claim 1, **characterized in that** each drive is supplied with an individual rotation speed relation (r) in a decentralised manner.

5. Method according to Claim 4, **characterized in that** the drive which is supplied with a relation is synchro-controlled by its own control indicator (12) and maintains its relative position with a precise angle.

6. Method according to Claim 1 or Claim 5, **characterized in that** each drive is supplied with an individual offset angle (wᵥ) in a decentralised manner.

7. Method according to Claim 1, **characterized in that** in each case a decentralised ramp function generator (10) is used, which makes it possible to stop each individual drive with synchro control and simultaneously by defining a "zero" rotation speed setpoint value and switching to a parametrisable reverse ramp in the event of communication errors in the synchronisation bus (4).

8. Device for carrying out the method according to one of Claims 1 to 7, having a higher ranking control system (1), which is connected to drive controllers (1₁ - 1ₙ) via a synchronisation bus (4), with each individual drive controller (1₁ - 1ₙ) having its own angle setpoint generator as a control indicator (12) which uses a rotation speed setpoint value (n*) that is transmitted to all drive controllers (1₁-1ₙ) to determine a control indicator value for the respective drive controller (1₁-1ₙ).

9. Device according to Claim 8, **characterized in that** multipliers (11) are available, with which the rotation speed (n*) supplied to the control indicator (12) is multiplied by a rotation speed relation (r), the rotation speed relation (r) having a fixed value or being defined by the higher ranking control system (5).

10. Device according to Claim 8, **characterized in that** each decentralised drive controller (1₁ - 1ₙ) has its own ramp function generator (10).

11. Device according to Claim 8, **characterized in that** adders (14) are available, with which the offset angle (wᵥ) can be added to the respective angle setpoint value (w*) in a decentralised manner.

12. Device according to Claim 8, **characterized in that** the offset angle (wᵥ) can be predefined either by the higher ranking control system (5) or by an external register adjuster or controller.

## Revendications

1. Procédé d'exploitation décentralisé d'un dispositif destiné à réguler le synchronisme à précision angulaire d'entraînements électriques de vitesse angulaire variable d'un système d'entraînement à plusieurs moteurs mis en réseau via un bus de synchronisation, une valeur angulaire de consigne d'un vecteur de commande étant appliquée aux entraînements, **caractérisé en ce qu'**il est généré dans chaque entraînement une valeur de vecteur de commande propre qui est formée de façon décentralisée dans l'appareil de régulation d'entraînement correspondant ( 1₁-1ₙ ) à partir d'une valeur de vitesse de rotation de consigne amenée à tous les entraînements via le bus de synchronisation ( 4 ).

2. Procédé selon la revendication 1, **caractérisé en ce que** la valeur du vecteur de commande est générée à partir de la valeur ( n* ) de vitesse angulaire de consigne sous la forme d'une dent de scie.

3. Procédé selon la revendication 1, **caractérisé en ce que** la valeur du vecteur de commande est fixée du point de vue statique comme du point de vue dynamique à un angle prédéterminé ( Wₛ ), la valeur du vecteur de commande pouvant être fixée à un point de référence quelconque.

4. Procédé selon la revendication 1, **caractérisé en ce que** chaque entraînement est affecté de façon décentralisée d'une relation de vitesse de rotation ( r ) individuelle.

5. Procédé selon la revendication 4, **caractérisé en ce que** l'entraînement affecté d'une relation est régulé de façon synchronisée au moyen de la valeur du vecteur de commande propre.

6. Procédé selon la revendication 1 ou la revendication 5, **caractérisé en ce que** chaque entraînement est affecté de façon décentralisée d'un déphasage individuel ( Wᵥ ).

7. Procédé selon la revendication 1, **caractérisé en ce qu'**il est utilisé à chaque fois un transmetteur de montée en régime ( 10 ) décentralisé qui permet d'arrêter chaque entraînement individuel en parallèle et à régulation de synchronisme au moyen d'une valeur de vitesse de rotation de consigne prédéterminée « nulle » et par conversion en une rampe de rétrogradation paramétrable en cas de dysfonctionnement de la communication effectuée par le bus de synchronisation ( 4 ).

8. Dispositif de mise en oeuvre du procédé selon l'une des revendications 1 à 7, comportant un système de commande de hiérarchie supérieure ( 1 ), qui est relié via un bus de synchronisation ( 4 ) à des appareils de régulation d'entraînement ( 1₁ à 1ₙ ), chaque appareil de régulation d'entraînement ( 1₁ à 1ₙ ) individuel comportant un transmetteur de valeur angulaire de consigne, qui lui est propre, se présentant sous la forme d'un vecteur de commande ( 12 ) qui détermine à partir d'une valeur ( n* ) de consigne de vitesse de rotation transmise à tous les appareils de régulation d'entraînement ( 1₁ à 1ₙ ) une valeur de vecteur de commande pour l'appareil de régulation d'entraînement ( 1₁ à 1ₙ ) respectif.

9. Dispositif selon la revendication 8, **caractérisé par** la présence de multiplicateurs ( 11 ) permettant de multiplier la vitesse de rotation ( n* ) amenée au vecteur de commande ( 12 ) avec une relation de vitesse angulaire ( r ), la relation de vitesse angulaire ( r ) possédant une valeur fixe ou étant prédéterminée par le système de commande de hiérarchie supérieure ( 5 ).

10. Dispositif selon la revendication 8, **caractérisé par** la présence d'un transmetteur de montée en régime ( 10 ) propre dans chaque appareil de régulation d'entraînement ( 1₁ à 1ₙ ) décentralisé.

11. Dispositif selon la revendication 8, **caractérisé par** la présence d'un additionneur ( 14 ) permettant d'additionner de façon décentralisée le déphasage ( wᵥ ) à la valeur angulaire de consigne ( w* ).

12. Dispositif selon la revendication 8, **caractérisé en ce que** le déphasage ( wᵥ ) peut être prédéterminé aussi bien par le système de commande supérieur ( 5 ) que par une régulation ou un décalage dans des registres extérieurs.
